# EUROPEAN PATENT SPECIFICATION

(11) **EP 0 312 414 B1**
(45) Date of publication and mention of the grant of the patent: **02.11.1995**
(21) Application number: 88402414.2
(22) Date of filing: 26.09.1988
(51) Int. Cl.: C08K 7/00, C08L 23/10

(54) **Fiber reinforced semi-finished products**
Faserverstärkte Halbzeuge
Semi-produits renforcés de fibres

(30) Priority: 29.09.1987 FR 8713464
(43) Date of publication of application: 19.04.1989
(73) Proprietor: AZDEL, INC., Shelby, North Carolina 28150 (US)
(72) Inventor: de Rancourt, Hubert, F-38500 Voiron (FR)
(74) Representative: Schoppe, Fritz, Dipl.-Ing.

(56) References cited:
- EP-A- 39 292
- EP-A- 56 703
- EP-A- 71 219
- EP-A- 300 909
- EP-A- 0 206 034
- EP-A- 0 211 479
- GB-A- 1 255 234
- US-A- 4 263 082
- US-A- 4 489 034
- Polymer Melt Rheology; A guide for industrial practice, F. Cogswell, 1981, p.71,72; Thermal Stability of Polymers, R.T. Couley, 1970, p.11,20,21; Enc. Poly. Sc. Technol., 11, p.655

## Description

The present invention relates to semi-finished products in sheet form, based essentially on a thermoplastic polymer component and reinforcing fibers, designed to be transformed into finished articles.

### BACKGROUND OF THE INVENTION

In the known techniques used for transforming thermoplastics by hot-compacting, the fluidity of the mixture containing the molten resin and the reinforcement is a very important parameter, because, depending on how much the moldability of the mixture can be improved :
- the piece to be molded can have any complex shape,
- and/or it can be thinner,
- and/or the transformation temperature can be lower, i.e. closer to the melting point of the resin,
- and/or the pressure to be applied during molding can be reduced,
- and/or the hot mixture can be introduced in a most simple way in the mold,
- and/or the surface appearance of the resulting piece is improved,
- and/or adherence of the resin to a supporting medium during compacting is easier.

Understandably, the fluidity of the mixture of molten resin and reinforcement is closely dependent on the ability of the bundle of fibers to become disorganized and mobilised mechanically under pressure ; for reinforcing fibers of a given nature this depends on :
- the proportion present in the mixture,
- the length/diameter ratio (aspect ratio),
- the quality of the dispersion of said fibers.

But in a reinforced thermoplastic article, the mechanical characteristics are dependent on the same criteria, so that in practice it is difficult, just by acting on the reinforcement, to reach a satisfactory compromise between the moldability and the mechanical characteristics.

Currently known semi-finished products in sheet form, prepared by the wet process, are essentially constituted of the intimate non-densified mixture of reinforcing fibers dispersed in unit state (i.e. as single fibers), such as for example glassfibers, with particles of polymers, such as a polyolefin powder. For presentation purposes or in order to facilitate one step or another in the transformation to molded articles, one or more layers of such sheets are often more or less heat-densified into a second generation semi-finished product which is more or less rigid and of which the fibrous structure is identical to that of the sheet. The thermoplastic resins for such semi-finished products are conventionally selected from grades used in methods for extruding or injecting acid resins : for example, in the case of homopolymer polypropylene, the grades used have a fluidity index (Norm ISO 1133 or ASTM D 1238 - under 2.16 kg at 230°C) less than 15 and more generally less than 10 g/10 min.

When such densified or non-densified semi-finished products are heated to above the resin melting point, and then compression-molded, it is often found that the molding operation can be critical because it leads to low strength in the transformation material or because of the complexity of the piece or else of the specificity of the application. It is also found in this case that the molding operation is at least partly improved if the heating temperature can be increased without creating a risk of degradation of the polymer and/or if the time period elapsing between the end of heating and the complete closure of the mold can be reduced. These solutions are not applicable at the industrial level ; however, they have contributed to direct the research toward a means which will have the same positive effect as temperature has.

One possibility is to modify the resin, and with polypropylene for example, to reduce the molecular weight, this being done during the melting operation which is employed to convert the powder such as is obtained at the end of polymer synthesis, to the particles used for injection or extrusion. To obtain the semi-finished products, this solution implies the subsequent grinding of the particles in order to obtain the powder, hence an additional step for which the required technical means are not always necessarily available.

Another possibility is to introduce an active organic peroxide into the polymer matrix during the preparation of the non-densified semi-finished product, such that, when the polymer resin melts at the time of the densification of the semi-finished product or of the molding, this causes a decomposition of said peroxide and, under the effect of the formed radicals, a reduction of the molecular weight of the resin. This method makes it possible to use powders obtained directly from polymer synthesis, but final moldability is dependent on the intensity of the heat treatments carried out between the end of the preparation of the non-densified semi-finished product and the compression of the final article, which introduces another parameter needing control.

Representative of the specific art in this area are the following :
US-A-4 489 034 recognises that melt flow is an important feature controlling moldability of extruded sheets of polyolefin. To improve melt flow the publication (18 December 1984) teaches the blending of 50-96 parts crystalline polyolefin eg polypropylene with 50-4 parts polyethylene, with peroxide, such that melting of the blend in an extruder causes peroxide activation which results in degradation of the polypropylene and crosslinking of the polyethylene. The composition may comprise filler such as glass fibers, but when present these would certainly be of short fiber length by virtue of the extrusion process performed to generate the sheet.

EP-A-0 206 034 teaches fiber reinforced polypropylene of improved glossiness. The gloss is improved by incorporating a minor proportion (10-35 parts) of polyethylene (of melt index at least 10mg/ 10 min) into 90-65 parts of polypropylene. The fibers must have diameter 0.1-2 micrometers and aspect ratio 20-60; such short length fibers would not have the dispersion problems in injection molding (which is discussed in this publication) or compression molding (which is not, and which is more typical of long fiber technology). This publication teaches that polyethylene improves gloss but does not teach that polyethylene melt index is important for any other function, which is not surprising since this publication is exclusively concerned with short fiber technology.

EP-A-0 211 479 teaches glass fiber reinforced thermoplastics compositions of improved physical properties which comprise a graft polypropylene (grafted with an unsaturated compound to improve adhesion to glass fibers), glass fibers treated with a silane, calcium stearate and an alkaline earth metal compound. The polymer component may also include ungrafted polypropylene. This publication contains no indication pointing towards the present invention. Indeed it teaches away, since it recognises that moldability of such compositions can be improved by increasing the fluidity of the composition, but the only route it teaches to improve this feature is to include a peroxide in the formulation such that at melt temperature, the polymer components are degraded to lower viscosity. All the specific examples of this publication (25 February 1987) are polypropylene of the type normally employed in extrusion or injection molding (i.e. less than 10 g/10 min melt index), and glass fibers of a length (3 mm) which places them in the conventional short fiber category.

GB-A-1 255 234 teaches the production of glass fiber reinforced thermoplastics resin compositions by blending an unreinforced resin with a masterbatch comprising fibers, resin and a dispersion aid. The resin in the masterbatch may itself constitute the dispersion aid if it has a low viscosity (lower than that of the unreinforced resin). Blending of the masterbatch with the unreinforced resin takes place at the melt temperature of the unreinforced resin; the presence of the dispersion aid (eg low viscosity resin) in the masterbatch, effectively forming a low viscosity coating around the glass fibers in the bulk resin since the low viscosity resin, and hence the glass fibers coated therewith, flows well within the melting bulk resin phase. The dispersion aid content of the masterbach is preferably 2-8 wt%, but it is said that this can be higher in the case where the dispersion aid is the low viscosity resin. However no exemplification is provided of the embodiment where the masterbatch resin itself constitutes the dispersion aid. Those examples which are provided suggest that the masterbatch resin is present in the final blend in such small quantities that it would have no significant effect on the viscosity of the blend: the masterbatch serves simply to improve dispersion of the fibers in the final blend, not to control the behaviour of that blend during subsequent transformations such a molding, by having a substantial effect on overall melt index. Moreover the masterbatch resin is not present in particle form and is not homogeneously dispersed throughout the unreinforced resin until after melt mixing.

EP-A-300909 not published prior to this application discloses semi-finished sheets wherein the thermoplastic polymers used have a melt flow index less than 100.

EP-A-0 071 219 discloses a wet mat of reinforcing fiber uniformly dispersed with thermoplastic particles which can be dried, optionally pressed, for subsequent use in compression molding, see page 3 lines 7-20. The benefits of sheet by this method are said to be improved water resistance and more uniform distribution of reinforcing material. This document does not address mouldability nor melt index of the polymer component.

The even earlier disclosure of EP-A-0 039 292 contains similar description of the papermaking process for preparation of reinforced thermoplastic sheet and teaches in broad general terms that the thermoplastic particle component should have basic properties (including melt index) that allow for plastification or melting and shaping, page 2 lines 29-34. There is no suggestion for selection of high melt index thermoplastic for any reason.

### SUMMARY OF THE INVENTION

It is desirable to provide readily moldable reinforced thermoplastics compositions having improved fluidity under heat, without altering the nature of the fibrous bundle, without having to resort to grinding and/or peroxide degradation operations, and without sacrificing physical properties.

It has been found that such compositions may be achieved via non-densified or densified semi-finished products in sheet form, of which at least part of the polymer matrix is in the form of particles of a resin which is very fluid in molten state.

According to the present invention there is provided a semi-finished product in sheet form and adapted to be heat transformed into a finished product, comprising a thermoplastic polymer component and from 15 to 60% by weight of the sheet of homogeneously dispersed reinforcing fibres, of length from 4 to 50 mm and in that the polymer component is in the form of particles, 10 to 100 % wt of the polymer component being in the form of high melt index polymer particles homogeneously mixed with the remainder of, or constituting, the polymer component characterised in that the polymer component has a melt index (2.16 kg at 230°C, ASTM D 1238) greater than 150 g/10 min and up to 600 g/10 min.

Obviously, the chemical nature of that very fluid resin varies with the basic resin (ie the remainder of the polymer component) selected for these semi-finished products of which the moldability is resultingly improved. It has indeed been found that if the resin is very fluid in the molten state, then the increase in the moldability of the semi-finished product can be at least equal to the effect of an increase of 30°C of the heating temperature, this permitting implementations which heretofore had proved difficult if not impossible.

The proportion of very fluid resin contained in the semi-finished products is dependent on the fluidity index of said resin and on the target moldability level : it is at least equal to 10 % of the total weight of the non-reinforcing part of the semi- finished products; it is present in an amount and is of such a melt index that the melt index of the polymer component is greater than 150, preferably greater than 200 and more preferably at least 400g/10 min.

Another advantage of the invention is that it is compatible with the processes of synthesis of very fluid resins in powder form, or with processes for modifying resin without any melting of powder, processes for which industrial capacities are often still inadequate.

This very fluid resin is intimately mixed with the other elements of the composition during the production of the non-densified semi-finished product which can be obtained by any conventional techniques, such as by the dry process, but preferably by the wet process in papermaking sheet form. In general terms the wet process, which is well known to those skilled in the art, comprises forming an aqueous slurry of homogeneously dispersed reinforcing fibers and polymer particles and optionally process aids, laying the slurry in a thin layer on a mesh, draining the layer and drying same to form the handleable sheet.

Of the other components of the semi-finished products, the reinforcing fibers are present in the proportion of 15 to 60 %, and more preferably 20 to 40 % by weight of the sheet.

Such fibers, whether they are used on their own or in a mixture and dispersed as units, are preferably glassfibers, but may be selected from, for example, carbon fibers, organic fibers with a high melting point (such as aramides, polyester and others), glass wool, rock wool and cellulosic fibers.

The reinforcing component is discussed hereafter in terms of glass fibers, but the parameters mentioned equally apply to other fibers. Thus the fibers are preferably from 6 to 30 mm long (ie clearly in the range of what is known as "long fiber technology" as distinct from "short fiber technology" and "continuous fiber technology"). In general short fiber reinforced materials are produced by extrusion methods, employ polymer phases of low melt index, and are used in extrusion and injection molding applications where the problems associated with fiber length and moldability are not generally encountered. In the long fiber technology field there are problems associated with molding, especially compression molding, and it is this which is addressed by the present invention. Preferably the fibers employed have an aspect ratio of at least 300, more preferably 600.

In the case where the polymer of high melt index is less than 100 % of the polymer component, the remainder of that component will also be a thermoplastic resin, also in particle form until the semi-finished products are hot-densified. Such resins as can be used, either singly or in mixture, are fibers, fibrils or powders (ie "particles") of at least one polymer among those known as utility thermoplastics of technical thermoplastics, but preferably the polyolefins and more particularly polypropylene. Preferably the high melt index polymer comprises homopolypropylene. In a preferred embodiment the polymer component is 100 % propylene homopolymer or comprises homopolypropylene of high melt index and another homopolypropylene of high melt index and another homopolypropylene of lower melt index.

In any event, whether the polymers are based on the same or different monomers, they are selected such that the mechanical properties of the final, compression molded article produced from the semi-finished product are not substantially different from those of compression moldings produced from the conventionally employed injection molding grades (although of course with these a substantially higher temperature is required to give an equivalent mold performance).

The particles referred to herein, whether of the high fluidity polymer and/or the remainder of the polymer component, are preferably less than 800 micrometers, more preferably less than 600 micrometers in size.

The semi-finished products may also contain binders, inorganic fillers, glass microspheres or microballs, ground glassfibers, ceramics fibers, conducting fibers, pigments or dyes, heat stabilizers and any of the additives normally used by those skilled in the art in order to obtain a final plastic article with the required properties.

The following examples are given to illustrate the invention.

### Example 1

Various semi-finished products in polypropylene reinforced with glassfibers and prepared in non-densified sheet form by the wet process described hereinbefore, were subjected to a laboratory test which consists in :
1. Preheating between hot plates 130 g of each material up to different temperatures varying with the tests.
2. Transferring the hot material into a "wing mold".
3. Molding the piece by quick compression.

The mold temperatures, pressing cycles and pressure are the same for all the semi-finished products tested and for all the tests.

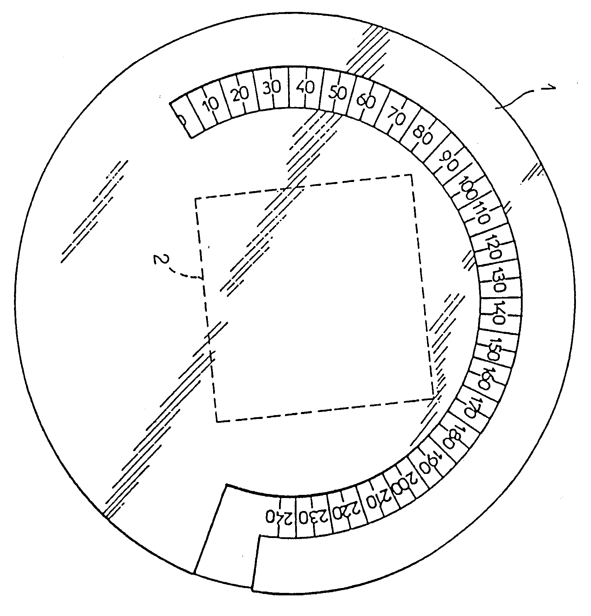

The complete piece is illustrated in plan view on the accompanying drawing : it is provided with an appendix 1 in arc of circle, of 16 mm width and 3 mm thickness. The hot material is placed in the mold at the level of the quadrilateral 2; under the pressure, said material flows and depending on its viscosity, it fills appendix 1 :
- completely if it is exceptionally moldable,
- or more or less partly, if it is very or not very moldable,
- or eventually not at all, if the semi-finished product is difficult to transform.

The moldability can therefore be assessed by the length of the appendix measured in grades (scale of 0 to 245 grades).

All the semi-finished products indicated hereinafter contain 30 % by weight of the same glassfibers of 6 mm length and high aspect ratio, dispersed as units. The fluidity (melt) indices are given under 2.16kg at 230°C.
Semi-finished product 1 :
representing the prior art : sheet with a powder obtained from a polypropylene of fluidity index 9 g/10 min.
Semi-finished product 2 :
Sheet with a powder obtained from a polypropylene of fluidity index 160 g/10 min.
Semi-finished product 3 :
Sheet with a powder of polypropylene of fluidity index 9 g/10 min and 22 % by weight of the sheet of a powder of polypropylene of fluidity index 160 g/10 min.
Semi-finished product 4 :
Sheet with a powder of polypropylene of fluidity index 400 g/10 min.

| SEMI-FINISHED PRODUCT | 1 | 2 | 3 | 4 |
|---|---|---|---|---|
| Moldability in grade at | | | | |
| 210°C | 80 | 135 | 124 | 152 |
| 240°C | 120 | | | |

The semi-finished products 2 and 4 according to the invention have a moldability at 210°C which is at least equal to that of semi-finished product 1 for a transformation temperature higher by 30°C (240°C).

### Example 2

We preheat between two hot plates at 210°C and mold into blanks a second series of semi-finished products reinforced with glass fibers, prepared in papermaking non-densified sheets, with different polypropylene powders.

Those semi-finished products with 32 % of glass fibers with a length of 13 mm, dispersed as units, will differ only by the melt flow index of polypropylene.

The molded blanks, from semi-finished products 6 to 8, show similar physical properties as semi-finished product 5, representative of the prior art.

| SEMI-FINISHED PRODUCT | 5 | 6 | 7 | 8 |
|---|---|---|---|---|
| MFI 2.16 kg/230°C in g/10 min | 9 | 250 | 400 | 600 |
| Flexural modulus (23°C) DIN 53457 in MPa | 4200 | 4180 | 4400 | 4000 |

| Unnotched Charpy | | | | |
|---|---|---|---|---|
| Impact strength DIN 53453 in KJ/m² | | | | |
| at +23°C | 39 | 40 | 37 | 37 |
| at -40°C | 43 | 43 | 47 | 50 |

## Claims

1. A semi-finished product in sheet form and adapted to be heat transformed into a finished product, comprising a thermoplastic polymer component and from 15 to 60% by weight of the sheet of homogeneously dispersed reinforcing fibres, of length from 4 to 50 mm and in that the polymer component is in the form of particles, 10 to 100 % wt of the polymer component being in the form of high melt index polymer particles homogeneously mixed with the remainder of, or constituting, the polymer component characterised in that the polymer component has a melt index (2.16 kg at 230°C, ASTM D 1238) greater than 150 g/10 min and up to 600 g/10 min.

2. A semi-finished product according to claim 1 wherein the melt index of the polymer component is greater than 200 g/10 min and more preferably at least 400 g/10 min.

3. A semi-finished product according to either of claims 1 or 2 wherein the high melt index polymer comprises homopolypropylene.

4. A semi-finished product according to claim 3 wherein the polymer component is 100 % homopolypropylene.

5. A semi-finished product according to anyone of the preceding claims wherein the reinforcing fibers are from 6 to 30 mm long.

6. A semi-finished product according to any one of the preceding claims which comprises from 20 to 40 wt % reinforcing fibers.

7. A semi-finished product according to any one of the preceding claims wherein the reinforcing fibers have an aspect ratio of at least 300, preferably at least 600.

8. A semi-finished product according to any one of the preceding claims wherein the reinforcing fibers are glass fibers.

9. A wet process for preparing a product according to any of claims 1 to 8 comprising the steps of forming an aqueous slurry of homogeneously dispersed reinforcing fibers and polymer component particles, the polymer component having a melt index (2.16 kg at 230°C, ASTM D 1238) greater than 150 g/10 min and up to 600 g/min, and optionally process aids, laying the slurry in a thin layer on a mesh, draining the layer and drying same to form the derived semi-finished product.

10. A use of the product according to any one of claims 1 to 8 in a compression moldable blank comprising one or more of the semi-finished product for the purpose of improving the moldability of the blank.

11. The use according to claim 10 wherein the semi-finished product additionally contains one or more of inorganic fillers, glass microballs or spheres, ground glass fiber, ceramic fibers, conducting fibers, pigments or dyes, and heat stabilizers.

## Patentansprüche

1. Halbzeug in Folienform und zur Heißumwandlung in ein Fertigprodukt angepaßt, das eine thermoplastische Polymerkomponente und 15 bis 60 Gew.-% der Folie homogen dispergierte verstärkende Fasern von einer Länge von 4 bis 50 mm umfaßt und in dem die Polymerkomponente in Form von Teilchen vorliegt, wobei 10 bis 100 Gew.-% der Polymerkomponente in Form von Polymerteilchen mit hohem Schmelzfluß-Index vorliegen, die mit dem Rest der Polymerkomponente homogen vermischt sind oder die Polymerkomponente bilden, **dadurch gekennzeichnet**, daß die Polymerkomponente einen Schmelzfluß-Index (2,16 kg bei 230 °C, ASTM D 1238) größer als 150 g/10 min und bis zu 600 g/10 min hat.

2. Halbzeug nach Anspruch 1, bei dem der Schmelzfluß-Index der Polymerkomponente größer ist als 200 g/10 min und vorzugsweise mindestens 400 g/10 min.

3. Halbzeug nach einem der Ansprüche 1 oder 2, bei dem das Polymer mit hohem Schmelzfluß-Index Homo-Polypropylen umfaßt.

4. Halbzeug nach Anspruch 3, bei dem die Polymerkomponente 100 % Homo-Polypropylen ist.

5. Halbzeug nach einem der vorhergehenden Ansprüche, bei dem die verstärkenden Fasern 6 bis 30 mm lang sind.

6. Halbzeug nach einem der vorhergehenden Ansprüche, das 20 bis 40 Gew.-% verstärkende Fasern enthält.

7. Halbzeug nach einem der vorhergehenden Ansprüche, bei dem die verstärkenden Fasern ein Aspektverhältnis von mindestens 300, vorzugsweise mindestens 600 haben.

8. Halbzeug nach einem der vorhergehenden Ansprüche, bei dem die verstärkenden Fasern Glasfasern sind.

9. Naßverfahren zur Herstellung eines Produktes gemäß einem der Ansprüche 1 bis 8, bei dem eine wäßrige Aufschlämmung homogen dispergierter verstärkender Fasern und Polymerkomponenten-Teilchen, wobei die Polymerkomponente einen SchmelzflußIndex (2,16 kg bei 230 °C, ASTM D 1238) von mehr als 150 g/10 min und bis zu 600 g/10 min hat, und gegebenenfalls Verfahrenshilfsmitteln gebildet wird, die Aufschlämmung in einer dünnen Schicht auf ein Sieb aufgebracht wird und die Schicht zur Bildung des Halbzeugs entwässert und getrocknet wird.

10. Verwendung des Produkts gemäß einem der Ansprüche 1 bis 8 in einem formpreßbaren Rohling, der ein oder mehrere Halbzeuge enthält, zur Verbesserung der Formbarkeit des Rohlings.

11. Verwendung nach Anspruch 10, bei der das Halbzeug zusätzlich einen oder mehrere anorganische Füllstoffe, Glas-Mikroperlen oder -kugeln, gemahlene Glasfaser, keramische Fasern, leitende Fasern, Pigmente oder Farbstoffe sowie Wärmestabilisiermittel enthält.

## Revendications

1. Produit semi-fini sous forme de feuille et apte à être transformé à chaud en un produit fini, comprenant un constituant du type polymère thermoplastique et 15 à 60 %, en poids de la feuille, de fibres de renforcement dispersées de manière homogène, ayant une longueur de 4 à 50 mm, le constituant polymérique étant sous forme de particules, 10 à 100 % en poids du constituant polymérique étant sous forme de particules de polymère à haut indice de fluidité mélangées de manière homogène au reste du, ou constituant le, constituant polymérique, caractérisé en ce que le constituant polymérique a un indice de fluidité (2,16 kg à 230°C, ASTM D 1238) supérieur à 150 g/10 min et allant jusqu'à 600 g/10 min.

2. Produit semi-fini selon la revendication 1, dans lequel l'indice de fluidité du constituant polymérique est supérieur à 200 g/10 min et de préférence au moins égal à 400 g/10 min.

3. Produit semi-fini suivant la revendication 1 ou 2, dans lequel le polymère à haut indice de fluidité comprend un homopolypropylène.

4. Produit semi-fini suivant la revendication 3, dans lequel le constituant polymérique est constitué de 5 % d'homopolypropylène.

5. Produit semi-fini suivant l'une quelconque des revendications précédentes, dans lequel les fibres de renforcement ont une longueur de 6 à 30 mm.

6. Produit semi-fini suivant l'une quelconque des revendications précédentes, qui comprend 20 à 40 % en poids de fibres de renforcement.

7. Produit semi-fini suivant l'une quelconque des revendications précédentes, dans lequel les fibres de renforcement ont un rapport d'allongement d'au moins 300, de préférence d'au moins 600.

8. Produit semi-fini suivant l'une quelconque des revendications précédentes, dans lequel les fibres de renforcement sont des fibres de verre.

9. Procédé par voie humide pour la préparation d'un produit suivant l'une quelconque des revendications 1 à 8, comprenant les étapes consistant à former une suspension aqueuse de fibres de renforcement et de particules de constituant polymérique dispersées de manière homogène, le constituant polymérique ayant un indice de fluidité (2,16 kg à 230°C, ASTM D 1238) supérieur à 150 g/10 min et allant jusqu'à 600 g/10 min, et facultativement des adjuvants de traitement, à étendre la suspension en une couche mince sur une grille, à égoutter la couche et sécher cette couche pour former le produit semi-fini dérivé.

10. Utilisation du produit suivant l'une quelconque des revendications 1 à 8, dans une pièce moulable par compression comprenant un ou plusieurs exemplaires du produit semi-fini à des fins d'amélioration de la moulabilité de la pièce.

11. Utilisation suivant la revendication 10, dans laquelle le produit semi-fini contient un ou plusieurs agents choisis dans le groupe comprenant des charges inorganiques, des microbilles ou sphères de verre, des fibres de verre broyées, des fibres céramiques, des fibres conductrices, des pigments ou colorants et des stabilisants thermiques.
